Europäisches Patentamt

European Patent Office

Office européen des brevets

(19)

(11) **EP 0 645 021 B1**

(12) **FASCICULE DE BREVET EUROPEEN**

(45) Date de publication et mention
de la délivrance du brevet:
**05.03.1997   Bulletin 1997/10**

(21) Numéro de dépôt: **93913115.7**

(22) Date de dépôt: **11.06.1993**

(51) Int Cl.6: **G02B 13/14**, G02B 13/06

(86) Numéro de dépôt international:
**PCT/FR93/00559**

**WO 93/25927 (23.12.1993 Gazette 1993/30)**

(54) **DISPOSITIF DE VEILLE PANORAMIQUE INFRAROUGE A GRANDE PORTEE**

WEITWINKLIGES INFRAROT-ÜBERWACHUNGSGERÄT MIT GROSSER REICHWEITE

LONG-RANGE INFRARED PANORAMIC SURVEILLANCE DEVICE

(84) Etats contractants désignés:
**DE FR GB**

(30) Priorité: **12.06.1992   FR 9207105**

(43) Date de publication de la demande:
**29.03.1995   Bulletin 1995/13**

(73) Titulaire: **THOMSON-CSF**
**75008 Paris (FR)**

(72) Inventeurs:
 • **REMY, Bertrand**
   **F-92402 Courbevoie Cédex (FR)**
 • **RIOLAND, Jacques**
   **F-92402 Courbevoie Cédex (FR)**
 • **ROLLIN, Joel**
   **F-92402 Courbevoie Cédex (FR)**
 • **BROUSSE, Marc**
   **F-92402 Courbevoie Cédex (FR)**
 • **GAUTHIER, François-Hugues**
   **F-92402 Courbevoie Cédex (FR)**
 • **PEPIN, Christian**
   **F-92402 Courbevoie Cédex (FR)**
 • **SAUTY, Eric**
   **F-92402 Courbevoie Cédex (FR)**

(74) Mandataire: **Lincot, Georges**
   **THOMSON-CSF-S.C.P.I.,**
   **13, Avenue du Président**
   **Salvador Allende**
   **94117 Arcueil Cédex (FR)**

(56) Documents cités:
   WO-A-86/03916          WO-A-91/09389
   DE-C- 4 114 304        DE-U- 7 418 364
   GB-A- 2 233 854        US-A- 4 399 356

**Description**

Le domaine de l'invention est celui de la veille panoramique infrarouge destinée à assurer la détection de cible, généralement aérienne, de façon totalement passive. Par détection passive, on entend une détection qui, contrairement à la détection de type radar, n'utilise pas l'émission d'ondes électromagnétiques pour repérer les cibles. La veille infrarouge permet de détecter le rayonnement émis par les cibles dans un domaine de longueur d'onde s'étendant classiquement de 3 à 5 µm ou de 8 à 12 µm.

L'objet de l'invention concerne un dispositif de veille panoramique infrarouge à grande portée et à couverture angulaire élevée, notamment en site. Un tel dispositif permet la détection de cibles lointaines avec une sensibilité très élevée, en couvrant par exemple une zone d'espace égale à 360° en gisement et à environ 5 à 10° en site.

Les dispositifs de veille panoramique infrarouge actuels associent un objectif de focalisation sur une barrette détectrice couplée à un circuit de lecture de signal, l'ensemble étant placé sur un plateau tournant entraîné en rotation uniforme, voir par example W0-A-91 09389.

De tels dispositifs de veille panoramique infrarouge conviennent dès lors que l'on ne cherche pas simultanément à obtenir une distance de détection élevée des cibles, par exemple au moins 20 km, combinée à une couverture angulaire en site élevé, par exemple 5 à 10°.

Pour obtenir à la fois, dans une observation panoramique, un champ en site élevé et une bonne sensibilité infrarouge permettant de détecter des cibles éloignées, c'est-à-dire de définir une portée élevée, l'invention propose d'utiliser au moins deux détecteurs associés à un même objectif de focalisation par couplage optique à travers un séparateur d'image.

Plus précisément, l'objet de l'invention concerne le dispositif de veille panoramique infrarouge à grande portée et à couverture angulaire élevée défini à la revendication 1.

Selon une forme de réalisation, le séparateur d'images est constitué de deux miroirs plans ayant une arête commune parallèle à l'axe site.

Selon une autre forme de réalisation, le séparateur d'image a la forme d'un "toit de maison" à quatre pentes constituées par quatre miroirs plans, l'arête supérieure de cet ensemble étant parallèle à l'axe site.

Le dispositif de veille selon l'invention utilise deux, quatre ou, plus généralement, n barrettes détectrices, n étant de préférence un nombre pair et le nombre de barrettes étant fonction de leur longueur et de la largeur du champ en site que l'on cherche à couvrir. La multiplication du nombre de barrettes permet de diminuer la largeur en site couverte par chacune d'elles, diminuant par là-même la dimension des optiques de reprise des images partielles sur les barrettes détectrices.

L'invention sera mieux comprise et d'autres caractéristiques et avantages apparaîtront à la lecture de la description qui suit accompagnée des figures annexées qui représentent respectivement :

- figure 1, un dispositif de veille panoramique infrarouge selon l'art antérieur ;
- figure 2, un schéma illustrant la limitation en site du champ couvert par un dispositif selon l'art antérieur ;
- figure 3, un schéma général des moyens constitutifs d'un dispositif de veille selon l'invention ;
- figure 4, un schéma illustrant la disposition des champs élémentaires analysés par un dispositif à deux barrettes détectrices selon l'invention ;
- figure 5a, une vue de dessus, perpendiculairement à l'axe site, d'un dispositif de veille selon une forme de réalisation à deux barrettes détectrices ;
- figure 5b, une vue latérale du même dispositif selon un plan perpendiculaire à la figure précédente ;
- figure 6, un exemple d'architecture optique pour un objectif de tête et un objectif de reprise associé destiné à un dispositif selon l'invention ;
- figure 7, une vue en perspective de l'architecture optique précédente complétée par un miroir de pointage en site ;
- figure 8, une mise en oeuvre de la forme de réalisation précédente avec quatre barrettes détectrices ;
- figure 9, une représentation du champ analysé par un dispositif à quatre barrettes détectrices selon l'exemple de réalisation précédent ;
- figure 10a, une autre forme de réalisation à quatre miroirs du séparateur d'image selon l'invention ;
- figure 10b, une vue latérale de la forme de réalisation précédente ;
- figure 11, une représentation du champ analysé par un dispositif de veille selon l'invention équipé d'un séparateur d'image à quatre miroirs.

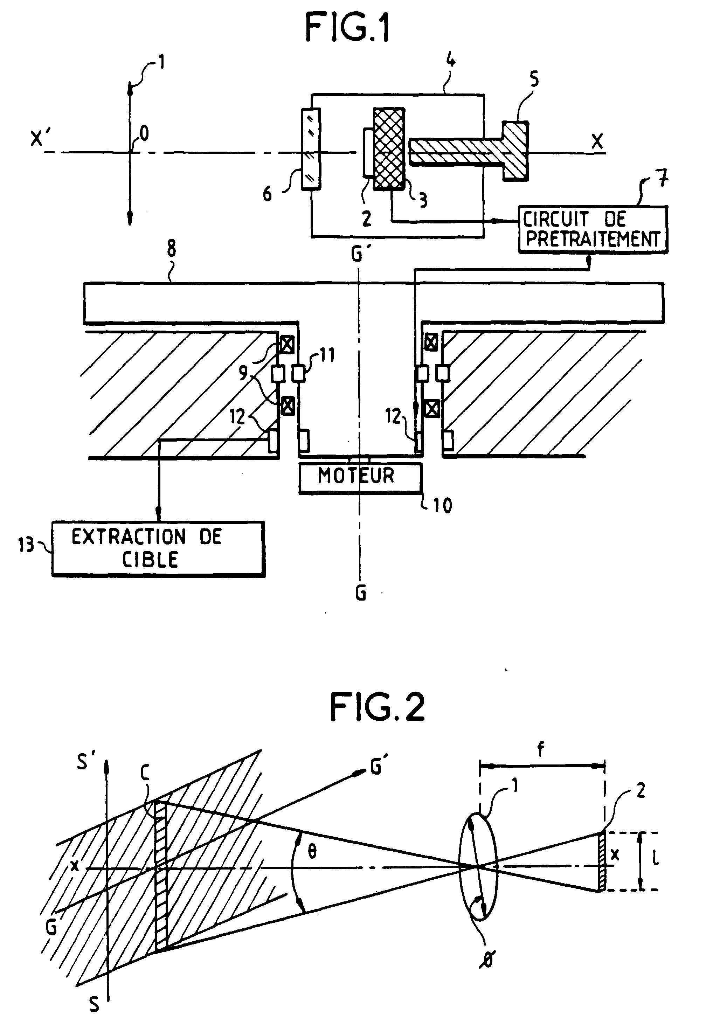

La figure 1 présente un dispositif de veille panoramique infrarouge dans une bande spectrale donnée et réalisé selon l'art connu. Ce dispositif est principalement constitué des éléments suivants ;

- un objectif de tête 1 d'axe optique XX' et de centre 0, qui projette une image de la scène observée sur une barrette détectrice 2 associée à un circuit 3 de lecture par multiplexage des signaux délivrés par la barrette 2 ;
- un cryostat 4 refroidi au moyen d'un "doigt froid" 5, le cryostat étant fermé par une fenêtre optique 6 transparente au rayonnement infrarouge dans la bande spectrale donnée, cette fenêtre étant disposée sur le trajet optique entre l'objectif d'entrée 1 et le détecteur 2 ;
- un circuit électronique de prétraitement 7 couplé au circuit de lecture 3 pour filtrer, amplifier, et éventuellement numériser les signaux qu'il reçoit ;
- un plateau tournant 8 sur lequel sont disposés l'ensemble des éléments précédents, le plateau 8 étant entraîné en rotation uniforme à environ 1 à 2 tours par seconde au moyen d'un ensemble de roulements 9 par un moteur annulaire 10 ;

- un système de recopie angulaire 11 ;
- un collecteur ou joint tournant 12 qui permet d'appliquer les signaux prétraités provenant du circuit électronique 7 à un boîtier d'extraction de cibles 13 capable de fournir une information de localisation de cible.

Avec un tel dispositif de veille panoramique infrarouge, il n'est pas possible d'obtenir à la fois une portée élevée de détection des cibles avec une sensibilité suffisante et une couverture angulaire en site élevé du fait des contraintes optiques et technologiques liées à l'utilisation d'une barrette détectrice.

Cette incompatibilité est plus précisément illustrée par la figure 2 qui représente schématiquement une vue en perspective de l'objectif de tête 1, caractérisé par sa distance focale f et son diamètre de pupille d'entrée $\varnothing$, et la barrette détectrice 2 associée à l'objectif 1. Cette barrette, composée classiquement de quelques centaines de capteurs photosensibles élémentaires disposés selon une rangée ou un nombre limité de rangées, est caractérisée par la longueur L de sa dimension principale. La barrette 2 placée au foyer de l'objectif de l'entrée 1, couvre, à l'aide d'un champ élémentaire C, un angle $\theta$ selon l'axe site SS' et 360° selon l'axe gisement GG' lors de sa rotation effectuée par le plateau tournant entraîné par le moteur décrit précédemment. La représentation pratique des axes G'G et S'S sur cette figure et sur les suivantes correspond aux directions de balayage gisement et site, et non aux axes gisement et site réels autour desquels ces balayages sont effectués.

D'après les lois de géométrie élémentaires, f, L et $\theta$ sont liés par la relation :

$$L/2 = f \, tg\theta/2.$$

Or une barrette détectrice infrarouge a une longueur limitée à environ 10 mm, en raison de sa liaison à un circuit de lecture de type CCD. Cette association induit des contraintes de dilatation différentielle, en particulier lorsque la barrette et le circuit de lecture sont réalisés en matériau de composition différente, par exemple en alliage HgCdTe pour la barrette et en silicium pour le circuit de lecture. Il en résulte, au vu de la relation précédente, que la distance focale f est limitée pour une valeur de l'angle en site $\theta$ donné puisque la valeur L est fixée ; par exemple pour une longueur de barrette d'environ 8 mm et pour obtenir un angle en site $\theta$ égal à 10°, f est limitée à environ 45 mm.

D'autre part, les lois de la photométrie infrarouge permettent de calculer la portée maximale à laquelle peut se trouver une cible quasi ponctuelle, par exemple une cible aérienne vue à une distance comprise entre 10 et 20 km, pour donner en sortie du circuit de lecture un signal suffisant pour pouvoir être détecté par le boîtier d'extraction de cible. Ce seuil de suffisance correspond à un Eclairement Minimum Utile, en abrégé E.M.U., définissant la sensibilité d'un équipement de veille. Or l'E.M.U. est inversement proportionnel au carré du diamètre $\varnothing$ de la pupille d'entrée de l'objectif. Ainsi pour obtenir une valeur de l'E.M.U. aussi faible que possible, de manière à atteindre une portée maximale, il est nécessaire d'avoir un diamètre de pupille $\varnothing$ le plus élevé possible. Mais il n'est pas possible d'augmenter inconsidérément le diamètre $\varnothing$ lorsque la distance focale f est fixée, une valeur $\varnothing = f$, correspondant à une ouverture relative égale à 1, pouvant être considérée comme un maximum.

Le dispositif de veille panoramique selon l'invention permet d'augmenter la portée de détection, sans chercher à augmenter la longueur L de la barrette détectrice.

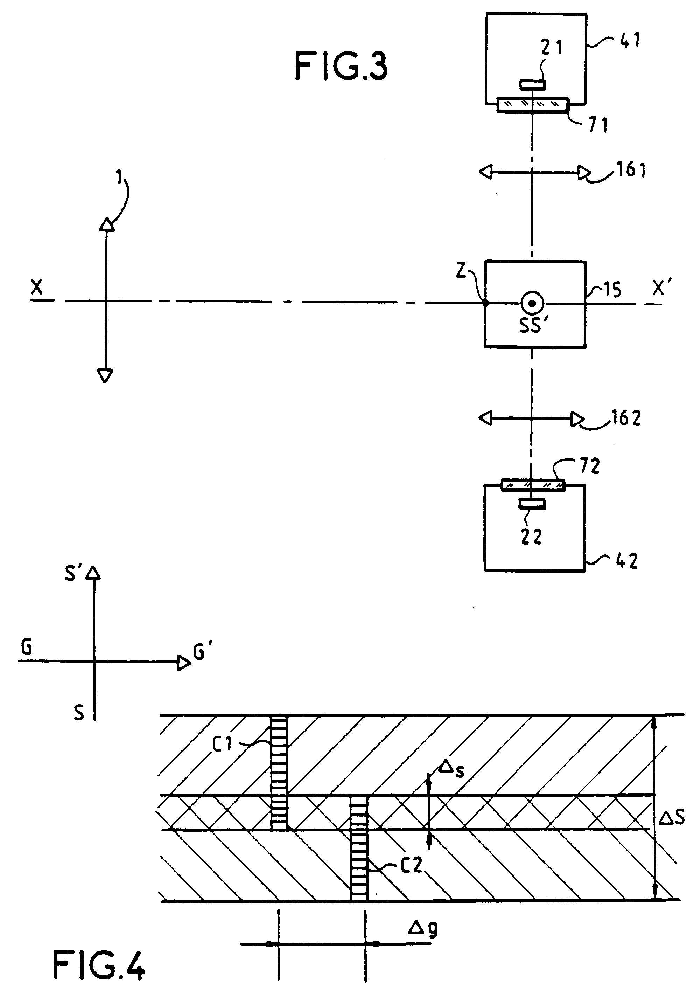

La figure 3 représente un schéma général d'agencement entre les moyens constitutifs de l'invention vus dans un plan contenant l'axe optique XX' de l'objectif de tête 1 et perpendiculaire à l'axe site SS'. Ces moyens comprennent un séparateur d'images 15, placé au voisinage du plan focal de l'objectif de tête 1 dont l'axe optique XX' rencontre le séparateur 15 en un point Z ; le séparateur est associé optiquement à au moins deux groupes de barrettes détectrices 21, 22, la conjugaison optique étant effectuée à l'aide de deux objectifs de reprise 161 et 162. Les barrettes 21 et 22 sont enfermées dans des cryostats 41 et 42 et sont couplées à des circuits de lecture et au circuit de prétraitement (non représentés) comme dans le cas de l'art connu ; les fenêtres 71 et 72 des cryostats sont disposées entre les barrettes et le séparateur d'image 15. La dimension principale des barrettes 21 et 22 est perpendiculaire au plan de la figure et les barrettes sont orientées de telle manière qu'elles se fassent face avec un décalage selon l'axe site SS'.

Dans ces conditions, les champs balayés par chacune des barrettes lors de la rotation en gisement, sont constitués par des bandes décalées selon l'axe site. La figure 4 illustre une telle disposition des champs dans le cas simple où les barrettes sont au nombre de 2. Chaque barrette 21, 22 "voit" un champ élémentaire, respectivement C1, C2, ces champs se recouvrant selon l'axe site SS' sur une distance $\Delta s$ correspondant à un angle de recouvrement en site de $\Delta\theta$. Le champ total en site $\Delta S$ est presque deux fois plus élevé que le champ total en site couvert par chaque barrette. Le décalage gisement $\Delta g$ est dû à la localisation différente des barrettes selon l'axe gisement ; le décalage gisement est compensé au niveau du circuit de prétraitement en tenant compte de la rotation en gisement du plateau tournant mesurée par le système de recopie angulaire. Dans ces conditions, les signaux reçus par le boîtier d'extraction de cibles correspondent à un ensemble de points alignés en site selon une même valeur échantillonnée du gisement. Le recouvrement en site $\Delta s$ des

champs élémentaires C1 et C2 permet ainsi d'assurer une continuité de détection au niveau du milieu du champ en site.

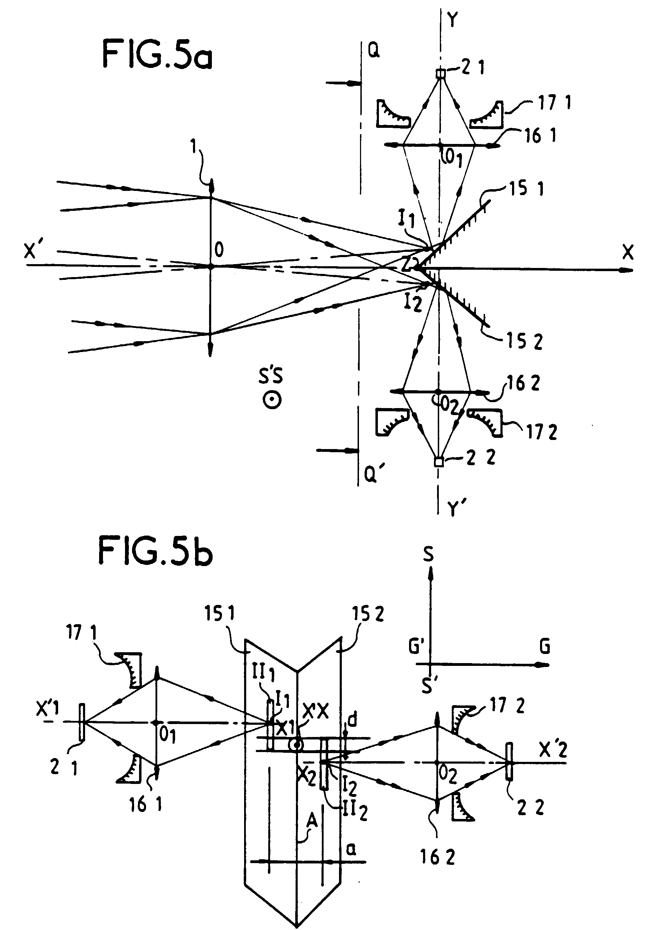

Les figures 5a et 5b représentent schématiquement une forme de réalisation du dispositif de veille panoramique selon l'invention, respectivement en coupe contenant l'axe optique principal X'X perpendiculairement à l'axe site S'S, et en vue orthogonale à la figure 5a contenant l'axe site SS' et coupant perpendiculairement l'axe optique principal X'X. Selon cette forme de réalisation, illustrée à la figure 5a, le séparateur d'image est constitué de deux miroirs plans 151 et 152 ayant une arête commune. Sur la figure 5a, la trace de cette arête commune se trouve sur l'axe optique X'OX de l'objectif de tête 1 de centre 0 et est donc confondue avec le point de contact Z. L'angle formé par les deux miroirs 151 et 152 est de 90° sur l'exemple de réalisation représentée, de sorte que les axes optiques des objectifs de reprise 161 et 162 de centres 01 et 02 sont alignés perpendiculairement à l'axe optique principal XOX'. Les points I1 et I2 correspondent aux centres des images intermédiaires des champs respectivement vus par les barrettes 21 et 22 à travers l'objectif de tête 1, les images intermédiaires II1 et II2 n'apparaissant que sur la figure 5b pour ne pas charger la figure 5a. Des rayons convergents sur les barrettes 21 et 22, passant respectivement par les points intermédiaires I1 et I2 sont représentés respectivement au moyen de traits à simple et double flèche afin d'illustrer la formation des images sur les barrettes.

La distance entre le séparateur d'image 15 et l'objectif de tête 1 est telle que les points I1 et I2 ne se trouvent pas à la surface des miroirs 151 et 152 mais en sont éloignés de quelques millimètres. Cette disposition permet de ne pas visualiser au niveau des barrettes 21 et 22 les défauts intrinsèques aux miroirs telles que rayures ou poussières incrustées.

Afin d'obtenir des champs décalés en site vus des barrettes 21 et 22, les barrettes et les objectifs de reprises associés sont décalés parallèlement à l'axe site S'S. Ce décalage apparaît sur la figure 5b et correspond à la distance séparant les axes optiques X'1X1 et X'2X2 des objectifs de reprise 161 et 162. Sur cette figure, apparaissent l'arête A du séparateur d'image 15 selon une droite verticale, les miroirs 151 et 152 en perspective, les centres I1 et I2 des images intermédiaires II1 et II2, et les barrettes 21 et 22 orientées selon l'axe site SS' en se faisant face.

La distance a entre les images intermédiaires II1 et II2, mesurée selon l'axe gisement G'G dans le plan focal de l'objectif de tête, donne la valeur du décalage en gisement Δg, tel que défini précédemment et représenté sur la figure 4. La distance d entre les extrémités des deux images intermédiaires II1 et II2 permet de calculer le recouvrement en site Δs tel que défini précédemment et représenté à la figure 4. Les images partielles formées par chaque barrette sont découpées selon l'axe site SS' selon des bandes se recouvrant partiellement telles qu'illustrées par les zones hachurées représentées sur la figure 4.

Comme représentés sur la figure 5b, les axes optiques secondaires X1X'1 et X2X'2 des objectifs de reprise 161 et 162 sont alignés sur les centres I1 et I2 des images intermédiaires II1 et II2. Cette caractéristique permet de minimiser la dimension du champ balayé par chacun des objectifs de reprise et donc de diminuer la dimension de ces objectifs, ce qui présente l'avantage d'utiliser des éléments optiques présentant pas ou peu d'aberration.

Cependant un problème lié à l'utilisation de détecteurs infrarouges demeure : c'est la détection de flux de fond indésirable émis par les différents éléments constituant le montage optoélectronique associé, tels que montures de lentilles ou composants électroniques. Ces éléments émettent un rayonnement, dont l'intensité obéit en fonction de la température à la loi du corps noir et qui, par réflexion et réémission en direction de la barrette détectrice est détectable. Afin de supprimer ces flux parasites, il est proposé d'ajouter entre les objectifs de reprise 161 et 162 et des détecteurs 21 et 22 associés, un miroir réfléchissant sphérique, respectivement 171 et 172, ces miroirs étant percés en leur centre d'une ouverture n'autorisant que le passage des rayons optiques utiles. Ainsi, dans les directions autres que celles des rayons utiles, les capteurs élémentaires des barrettes détectrices ne reçoivent par réflexion sur ce miroir, par effet dit "effet Narcisse", que des flux provenant de points très froids situés à l'intérieur du cryostat refroidi. Pour que l'effet recherché se produise, les centres de courbure des miroirs 171 et 172 sont situés approximativement au centre des barrettes 21 et 22, les miroirs étant placés au niveau des pupilles de sortie de chacun des objectifs de reprise 161 et 162.

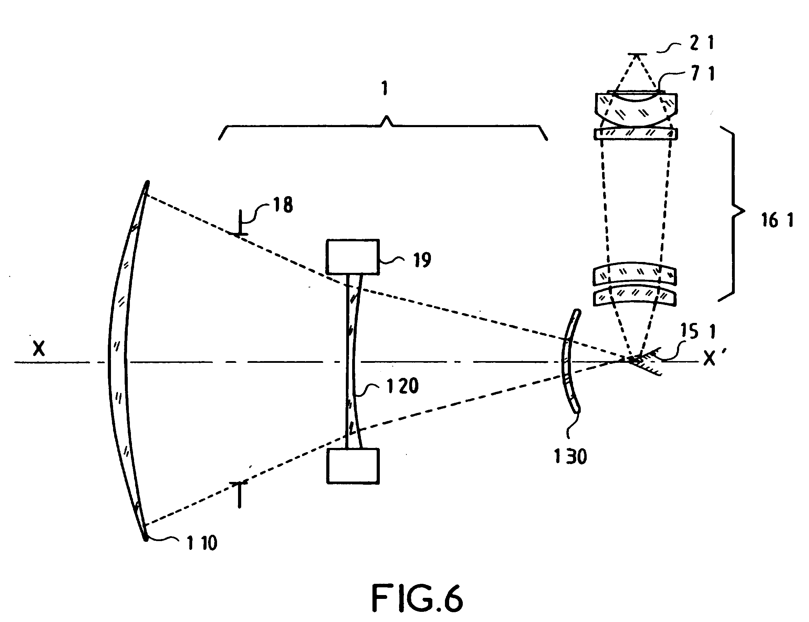

En ce qui concerne l'optimisation de la conjugaison optique entre l'objectif de tête et les objectifs de reprise, la composition de l'objectif de tête est adaptée de manière à obtenir une pupille de sortie pour cet objectif de tête rejetée à l'infini, le cône des rayons de focalisation en un point de la barrette se translatant alors parallèlement à lui-même lorsqu'on passe d'un point de la barrette à un autre. La figure 6 présente un exemple d'architecture de l'objectif de tête et d'un des objectifs de reprise associée permettant une telle optimisation. Par souci de simplification, un seul objectif de reprise 161 a été représenté, l'autre objectif de reprise se déduisant par symétrie selon l'axe optique de l'objectif de tête 1. Sur cet exemple l'objectif 1 est composé de trois lentilles 110, 120 et 130, les lentilles 110 et 130 étant réalisées en germanium et la lentille 12 en alliage AMTIR ; un diaphragme 18, disposé entre les lentilles 110 et 120, définit le diamètre de pupille d'entrée. Pour compenser les défocalisations engendrées par des variations de température, la lentille 120 est associée à un moteur 19 commandant cette lentille en translation selon l'axe optique XX' de l'objectif de tête 1. L'objectif de reprise 161 est, lui, composé de quatre lentilles, si bien que la combinaison optique associant l'objectif de tête à un objectif de reprise, pour former une voie optique de détection, est composée de sept lentilles.

Cette architecture optique permet de conserver la mise au point réalisée sur les barrettes détectrices et autorise une ouverture relative de $f/\varnothing = 1$ au niveau des barrettes ; le positionnement à l'infini de la pupille de sortie de l'objectif de tête 1 facilite la correction des aberrations optiques et simplifie la conjugaison pupillaire entre les objectifs.

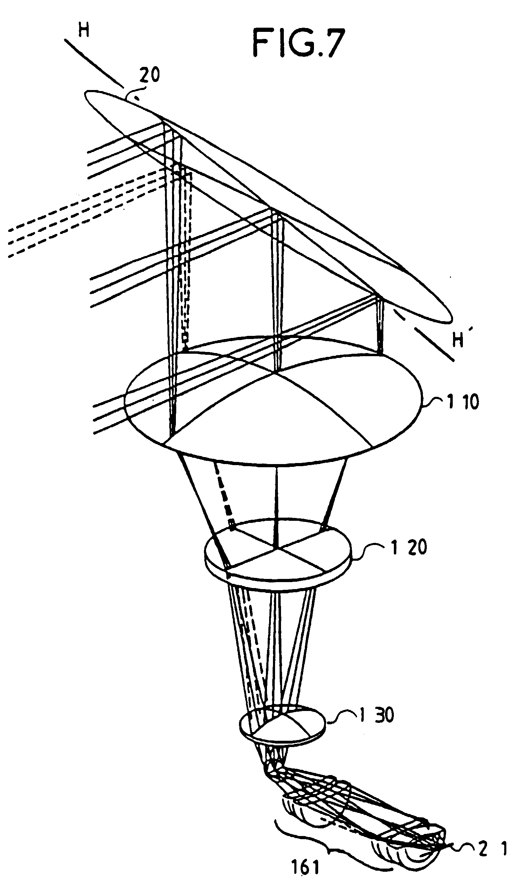

Pour représenter plus complètement le montage optique de tête, la figure 7 illustre l'association de l'architecture optique qui vient d'être décrite avec un miroir mobile pour permettant de varier le pointage en site pouvant être couvert par les barrettes de détection. Sur cette figure, apparaissent les lentilles 110, 120, 130, une partie du séparateur d'image 15, les lentilles L1 à L4 en coupe partielle formant l'objectif de reprise 161, et la barrette détectrice 21. La variation de champ est obtenue par rotation d'un miroir de tête 20, selon un axe horizontal HH'. Divers rayons, matérialisés par des traits fléchés, ont été représentés afin de figurer les trajets optiques de certains flux lumineux.

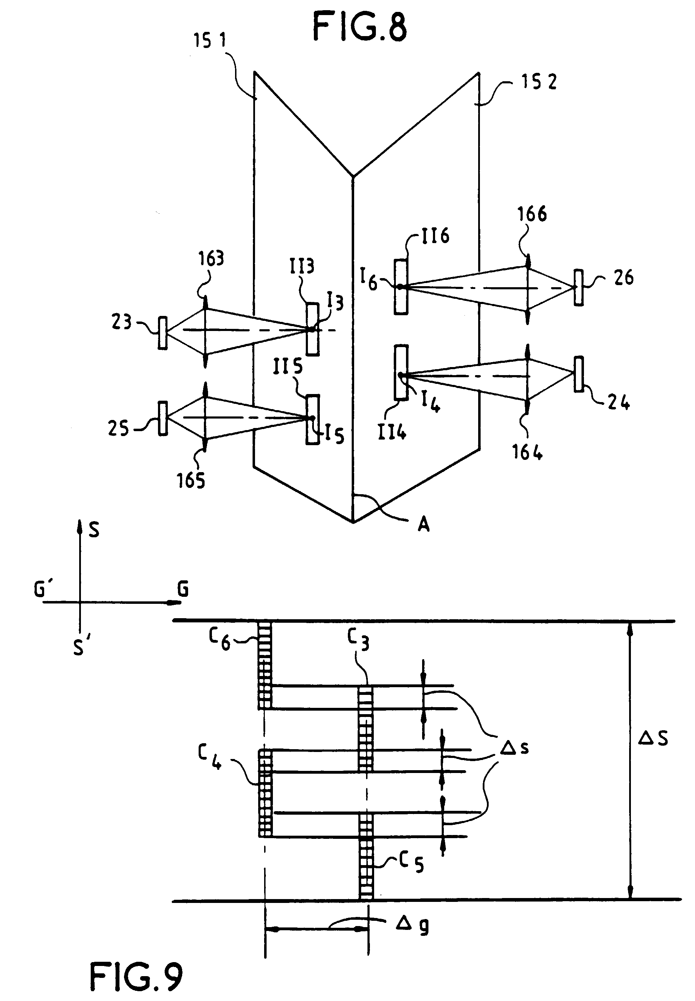

La forme de réalisation qui vient d'être décrite peut mettre en oeuvre plus de deux barrettes détectrices. Par exemple la figure 8, qui représente une vue identique à celle de la figure 5b, illustre la mise en oeuvre de quatre barrettes détectrices, 23 à 26, chacune étant associée à un objectif de reprise, respectivement 163 à 166 ; chacune de ces associations utilise le flux réfléchi alternativement par les miroirs 151 et 152 pour focaliser sur chaque barrette les rayons provenant d'une image intermédiaire, respectivement II3 à II6, centrée respectivement sur les points I3 à I6 situés sur l'axe optique de l'objectif de reprise correspondant. Les barrettes sont décalées selon l'axe site parallèle à l'arête A, mais les barrettes alignées selon une même verticale, respectivement 23 et 25, 24 et 26, ne présentent pas de décalage en gisement.

Les champs élémentaires obtenus par l'utilisation de quatre barrettes détectrices de l'exemple précédent sont représentés sur la figure 9. Les champs C3, C5 et C4, C6, respectivement vus par les barrettes 23 et 25 et par les barrettes 24 et 26, sont alignés deux à deux selon une ligne verticale parallèle à l'axe site SS' car ils correspondent à une même valeur de gisement selon l'axe gisement GG'. Les champs C6, C3, C4 et C5, se recouvrent partiellement selon l'axe site de $\Delta s$, les champs C6 et C4 étant décalés par rapport aux champs C3 et C5 de $\Delta g$ selon l'axe gisement.

Une autre forme de réalisation de l'invention mettant en oeuvre également quatre barrettes détectrices est décrite ci-après. Dans cette forme de réalisation, le séparateur d'image 1 est un prisme réfléchissant à quatre pentes en forme de "toit de maison".

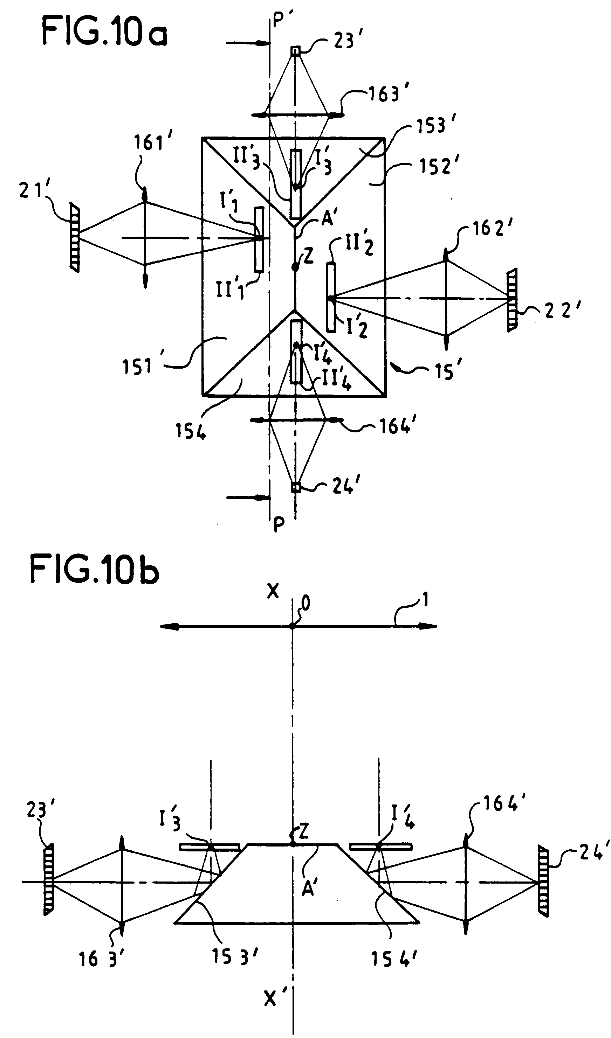

La figure 10a représente, selon une vue identique à celle des figures 5b et 8, c'est-à-dire perpendiculairement à l'axe optique de l'objectif de tête XOX', un tel séparateur d'image 15' ainsi que les objectifs de reprise 161' à 164' et les barrettes détectrices 21' à 24' associées. Quatre miroirs plans 151' à 154' forment les quatre pentes du séparateur 15'. Les pentes des miroirs 151' et 152' d'arête commune A', les objectifs de reprise 161' et 162', et les barrettes 21' et 22' sont identiques aux pentes des miroirs 151 et 152 d'arête commune A, aux objectifs de reprise 161 et 162 et aux barrettes 21 et 22 de la figure 5b correspondant à la forme de réalisation précédente. Par contre, les barrettes 23' et 24' sont perpendiculaires au plan de la figure et les images intermédiaires II'3 et II'4 ne sont pas parallèles au plan des miroirs correspondant 153' et 154'.

L'orientation relative des images intermédiaires et des barrettes par rapport au séparateur optique apparaît sur la figure 10b qui représente une vue latérale de la figure 10a précédente selon un plan perpendiculaire PP' parallèle à l'arête principale A', commune aux miroirs 151' et 152'. Sur cette figure, apparaissent les images intermédiaires II'3 et II'4 vues respectivement par les barrettes 23' et 24', à travers l'objectif de tête 1, ces images intermédiaires étant parallèles à l'arête principale A' du séparateur d'image commune aux miroirs 151' et 152' les images intermédiaires sont centrées sur les points i'3 et i'4 situées dans le plan image de l'objectif 1. La dimension principale des barrettes 23' et 24' est parallèle au plan de la figure et les centres des images intermédiaires I'3 et I'4, ainsi que I'1 et I'2, sont situés sur les axes optiques des objectifs de reprise 163' et 164', respectivement 161' et 162'.

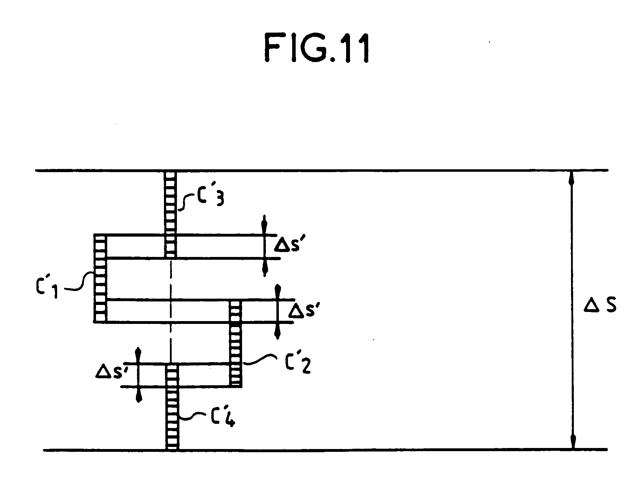

Les champs élémentaires en gisement obtenus par l'utilisation de quatre barrettes associées à un séparateur d'image en forme de "toit de maison" sont représentés sur la figure 11. Les champs extrêmes en site C'3 et C'4, respectivement vus par les barrettes 23' et 24', sont alignés selon un même verticale et correspondent donc à une même valeur de gisement mesurée sur l'axe GG'. Les champs C'1 et C'2, respectivement vus par les barrettes 21' et 22', sont situés selon l'axe gisement de part et d'autre des champs alignés C'3 et C'4 ; cette caractéristique provient du fait que les centres I'3 et I'4 des images intermédiaires sont alignés avec le point Z, milieu de l'arête principale A', alors que les centres I'1 et I'2 des autres images intermédiaires sont situés de chaque côté de cette arête. Les champs élémentaires présentent également selon l'axe site S'S des zones de recouvrement $\Delta s'$, dont l'utilité a été décrite ci-dessus.

L'invention n'est pas limitée aux exemples de réalisation décrits et représentés. En particulier, le nombre de barrettes mis en oeuvre n'est pas limité à 2 ou 4, les orientations des miroirs constitutifs du séparateur d'image peuvent être différentes par rapport à l'axe optique de l'objectif de tête, les décalages en site des barrettes peuvent être différents de manière à provoquer un recouvrement en site de valeur différente, un des miroirs peut être supprimé pour obtenir une focalisation sans réflexion. Afin d'obtenir une telle formation d'image sans réflexion intermédiaire, il est également possible d'écarter très faiblement les deux miroirs de la première forme de réalisation du séparateur d'image et de placer une barrette associée à un objectif de reprise sur l'axe optique de l'objectif de tête, en aval du séparateur et à une distance adaptée afin de former sur cette barrette une image partielle.

D'autre part, l'homme du métier peut résoudre différemment les problèmes liés au flux parasite de fond, en exploitant le fait que l'objectif de tête comporte une pupille de sortie à l'infini ; en effet, cette particularité permet de réaliser des objectifs de reprise tels que leur conjugaison pupillaire permet d'obtenir une pupille de sortie située dans le cryostat, au lieu de mettre en oeuvre des miroirs sphériques percés.

## Revendications

1. Dispositif de veille panoramique infrarouge à grande portée et à couverture angulaire (θ) élevée, notamment en élévation le long d'un axe site (SS'), comportant un objectif de tête (1) pour former une image de la scène observée sur une barrette détectrice (2) associée à un circuit de lecture (3) des charges libérées par la barrette, l'ensemble de ces éléments étant placé sur un plateau tournant (8) entraîné en rotation uniforme autour d'un axe de gisement (GG'), ce dispositif de veille étant caractérisé en ce que ledit ensemble comporte en outre au moins une deuxième barrette détectrice (21, 22 ; 23-26; 21' - 24'), chaque barrette détectrice dudit ensemble étant couplée électroniquement à un circuit de lecture respective délivrant, via un circuit électronique de prétraitement (7), un signal vidéo, et optiquement à l'objectif de tête (1) via un séparateur d'image (15; 15'), placé au voisinage du plan focal de l'objectif de tête, et un objectif de reprise (161, 162 ; 163-166; 161' - 164'), chaque barrette étant placée, avec le circuit de lecture correspondant, dans un cryostat (4; 41,42), l'objectif de tête (1) formant, vue de chaque barrette dudit ensemble, une image intermédiaire (II1, II2 ; II'1-II'4) projetée sur la barrette correspondante par le couplage optique réalisé par le séparateur d'image et l'objectif de reprise correspondant, les barrettes de l'ensemble étant décalées (Δs, Δs') le long de l'axe site (S'S) pour former des images partielles du champ balayé selon l'axe site , le circuit de prétraitement électronique permettant de reconstituer une image de la scène à partir des images partielles.

2. Dispositif de veille selon la revendication 1, caractérisé en ce que le séparateur d'image (15) comporte deux miroirs plans (151, 152) ayant une arête commune (A), les deux miroirs étant orientés pour former sur chaque barrette (21, 22) par réflexion sur chacun d'eux puis couplage à travers l'objectif de reprise correspondant (161, 162), une image partielle décalée selon l'axe site (S'S) de l'image de la scène observée.

3. Dispositif selon la revendication 2, caractérisé en ce que l'image intermédiaire (II1, II2) vue de chaque barrette (21, 22) est située à proximité de chaque miroir (151, 152).

4. Dispositif selon les revendications 2 ou 3, caractérisé en ce que les miroirs (151, 152) sont écartés et en ce qu'une barrette est disposée sur l'axe optique (XX') de l'objectif de tête (1) en aval du séparateur (15).

5. Dispositif selon la revendication 1, caractérisé en ce que le séparateur d'image (15') comporte quatre miroirs plans (151' ; 152' ; 153' ; 154') en forme de toit ayant une arête principale (A') parallèle à l'axe site (SS') et commune à deux des miroirs (151' ; 152'), en ce que chaque miroir est associé à une barrette détectrice (21' ; 22' ; 23' ; 24') à travers un dispositif de reprise (161' ; 162' 163' ; 164'), les deux barrettes (21' ; 22') associées aux miroirs d'arête commune (A') étant parallèles à l'axe site (SS') et les deux autres barrettes (23' ; 24') étant perpendiculaire à l'axe site (SS') dans le plan contenant l'axe site (SS') et l'axe optique (X'X) de l'objectif de tête (1).

6. Dispositif selon l'une des revendications précédentes, caractérisé en ce que le décalage entre les barrettes selon l'axe site est ajusté pour provoquer un recouvrement partiel des champs balayés par ces barrettes.

7. Dispositif selon l'une des revendications précédentes, caractérisé en ce qu'un miroir sphérique (171, 172) est disposé sur chaque axe optique secondaire des objectifs de reprise (161, 162), chaque miroir sphérique ayant un centre de courbure situé à proximité du centre de la barrette correspondante (21, 22) et étant percé en leur centre d'une ouverture n'autorisant que le passage des rayons utiles.

8. Dispositif selon l'une des revendications précédentes, caractérisé en ce que l'objectif de tête (1) comporte trois lentilles (110, 120, 130) et chaque objectif de reprise (161, 162) quatre lentilles, la pupille de sortie de l'objectif de tête étant rejetée à l'infini et les pupilles de sortie des objectifs de reprise étant situées dans le cryostat.

9. Dispositif selon l'une des revendications précédentes, caractérisé en ce que le décalage entre les barrettes (21, 22 ; 21', 22') se traduit par un recouvrement partiel (Δs) selon l'axe site (SS') des champs balayés par les barrettes lors de la rotation du dispositif.

10. Dispositif selon l'une des revendications précédentes, caractérisé en ce que les centres (I1, I2, I'1, I'2, I'3, I'4) des images intermédiaires (II1, II2, II'1, II'2, II'3, II'4) sont situés sur les axes optiques (X'1 X1, X'2 X2) des objectifs de reprise (161, 162).

**Patentansprüche**

1. Vorrichtung zur Infrarot-Panoramaüberwachung mit großer Reichweite und großem Erfassungswinkel (θ), insbesondere hinsichtlich der Elevation entlang einer Höhenachse (SS'), mit einem Kopfobjektiv (1) zum Abbilden eines Bildes der beobachteten Umgebung auf eine Detektorleiste (2), die einer Leseschaltung (3) für die von der Leiste freigesetzten Ladungen zugeordnet ist, wobei die Baugruppe aus diesen Elementen auf einer drehbaren Platte (8) angeordnet ist, die um eine Seitenachse (GG') in eine gleichförmige Drehung versetzt wird, wobei diese Überwachungsvorrichtung dadurch gekennzeichnet ist, daß die genannte Baugruppe außerdem wenigstens eine zweite Detektorleiste (21, 22; 23-26; 21'-24') aufweist, wobei jede Detektorleiste der Baugruppe elektronisch mit einer jeweiligen Leseschaltung gekoppelt ist, die über eine elektronische Vorverarbeitungsschaltung (7) ein Videosignal liefert, und optisch mit dem Kopfobjektiv (1) über eine Bildtrennvorrichtung (15, 15'), die in der Nähe der Brennebene des Kopfobjektivs angeordnet ist, sowie ein Aufnahmeobjektiv (161, 162; 163-166; 161'-164'), wobei jede Leiste mit der entsprechenden Leseschaltung in einem Kryostaten (4; 41, 42) angeordnet ist, wobei das Kopfobjektiv (1) von jeder Leiste der Baugruppe aus gesehen ein Zwischenbild (II1, II2; II'1-II'4) abbildet, das auf die entsprechende Leiste durch die optische Kopplung projiziert wird, die von der entsprechenden Bildtrennvorrichtung und dem entsprechenden Aufnahmeobjektiv erzielt wird, wobei die Leisten der Baugruppe entlang der Höhenachse (S'S) versetzt (ΔS, ΔS') sind, um Teilbilder des entlang der Höhenachse abgetasteten Feldes abzubilden, wobei die elektronische Vorverarbeitungsschaltung ermöglicht, ein Bild der Umgebung aus den partiellen Bildern zu rekonstruieren.

2. Überwachungsvorrichtung nach Anspruch 1, dadurch gekennzeichnet, daß die Bildtrennvorrichtung (15) zwei ebene Spiegel (151, 152) aufweist, die eine gemeinsame Kante (A) aufweisen, wobei die beiden Spiegel so ausgerichtet sind, daß sie auf jede Leiste (21, 22) durch Reflexion an jedem von ihnen und dann Kopplung über das entsprechende Aufnahmeobjektiv (161, 162) ein entlang der Höhenachse (S'S) versetztes Teilbild des Bildes der überwachten Umgebung formen.

3. Vorrichtung nach Anspruch 2, dadurch gekennzeichnet, daß das von jeder Leiste (21, 22) gesehene Zwischenbild (II1, II2) in der Nähe jedes Spiegels (151, 152) angeordnet ist.

4. Vorrichtung nach Anspruch 2 oder 3, dadurch gekennzeichnet, daß die Spiegel (151, 152) getrennt sind und daß eine Leiste auf der optischen Achse (X'X) des Kopfobjektivs (1) vor der Trennvorrichtung (15) angeordnet ist.

5. Vorrichtung nach Anspruch 1, dadurch gekennzeichnet, daß die Bildtrennvorrichtung (15') vier ebene Spiegel (151', 152', 153', 154') in der Form eines Daches aufweist, das eine Hauptkante (A') aufweist, die zur Höhenachse (SS') parallel und zweien dieser Spiegel (151'; 152') gemeinsam ist, daß jeder Spiegel einer Detektorleiste (21'; 22'; 23'; 24') über eine Aufnahmevorrichtung (161'; 162'; 163'; 164') zugeordnet ist, wobei die den Spiegeln mit gemeinsamer Kante (A') zugeordneten beiden Leisten (21'; 22') zur Höhenachse (SS') parallel sind und die beiden anderen Leisten (23'; 24') senkrecht zur Höhenachse (SS') in der Ebene sind, welche die Höhenachse (SS') und die optische Achse (X'X) des Kopfobjektivs (1) enthält.

6. Vorrichtung nach einem der vorhergehenden Ansprüche, dadurch gekennzeichnet, daß der Versatz zwischen den Leisten entlang der Höhenachse so eingestellt ist, daß eine teilweise Überdeckung der von diesen Leisten abgetasteten Felder hervorgerufen wird.

7. Vorrichtung nach einem der vorhergehenden Ansprüche, dadurch gekennzeichnet, daß auf jeder optischen Sekundärachse der Aufnahmeobjektive (161, 162) ein sphärischer Spiegel (171, 172) angeordnet ist, wobei jeder sphärische Spiegel einen Krümmungsmittelpunkt aufweist, der in der Nähe der Mitte der entsprechenden Leiste (21, 22) angeordnet ist, und in seiner Mitte von einer Öffnung durchbrochen ist, die nur den Durchgang von nützlichen Strahlen ermöglicht.

8. Vorrichtung nach einem der vorhergehenden Ansprüche, dadurch gekennzeichnet, daß das Kopfobjektiv (1) drei Linsen (110, 120, 130) und jedes Aufnahmeobjektiv (161, 162) vier Linsen enthält, wobei die Austrittspupille des Kopfobjektivs ins Unendliche verlagert ist und die Austrittspupillen der Aufnahmeobjektive in dem Kryostaten liegen.

9. Vorrichtung einem der vorhergehenden Ansprüche, dadurch gekennzeichnet, daß der Versatz zwischen den Leisten (21, 22; 21', 22') zu einer teilweisen Überdeckung (ΔS) der von den Leisten bei der Drehung der Vorrichtung abgetasteten Felder entlang der Höhenachse (SS') führt.

10. Vorrichtung einem der vorhergehenden Ansprüche, dadurch gekennzeichnet, daß die Mitten (I1, I2, I'1, I'2, I'3, I'4) der Zwischenbilder (II1, II2, II'1, II'2, II'3, II'4) auf den optischen Achsen (X'1 X1, X'2 X2) der Aufnahmeobjektive (161, 162) liegen.

## Claims

1. Long-range, infrared, panoramic surveillance device with wide angular coverage (θ), particularly in elevation along an elevation axis (SS'), including a head objective (1) for forming an image of the scene observed on a linear detector array (2) associated with a circuit (3) for reading the charges liberated by the linear array, this assembly of elements being placed on a turntable (8) driven in uniform rotation about an azimuth axis (GG'), this surveillance device being characterized in that the said assembly further includes at least one second linear detector array (21, 22; 23-26; 21'-24'), each linear detector array of the said assembly being coupled electronically to a respective read circuit delivering a video signal via an electronic preprocessing circuit (7), and optically to the head objective (1) via an image splitter (15; 15'), placed in the vicinity of the focal plane of the head objective, and a repeater objective (161, 162; 163-166; 161'-164'), each linear array being placed, with the corresponding read circuit, in a cryostat (4; 41, 42), the head objective (1), seen from each linear array of the said assembly, forming an intermediate image (II1, II2; II'1-II'4) projected onto the corresponding linear array by the optical coupling performed by the image splitter and the corresponding repeater objective, the linear arrays of the assembly being offset (ΔS,ΔS') along the elevation axis (S'S) in order to form partial images of the field scanned along the elevation axis, the electronic preprocessing circuit making it possible to reconstitute an image of the scene from the partial images.

2. Surveillance device according to Claim 1, characterized in that the image splitter (15) includes two flat mirrors (151, 152) having a common edge (A), the two mirrors being oriented so as to form, on each linear array (21, 22), by reflection on each of them then coupling through the corresponding repeater objective (161, 162), a partial image offset along the elevation axis (S'S) of the image of the scene observed.

3. Device according to Claim 2, characterized in that the intermediate image (II1, II2) seen from each linear array (21, 22) is situated in proximity to each mirror (151, 152).

4. Device according to Claims 2 and 3, characterized in that the mirrors (151, 152) are spaced apart and in that a linear array is arranged on the optical axis (XX') of the head objective (1) downstream of the splitter (15).

5. Device according to Claim 1, characterized in that the image splitter (15') includes four flat mirrors (151'; 152'; 153'; 154') in the shape of a roof having a main edge (A') parallel to the elevation axis (SS') and common to two of the mirrors (151'; 152'), in that each mirror is associated with a linear detector array (21'; 22'; 23'; 24') through a repeater device (161'; 162' 163'; 164'), the two linear arrays (21'; 22') associated with the mirrors with the common edge (A') being parallel to the elevation axis (SS') and the other two linear arrays (23'; 24') being perpendicular to the elevation axis (SS') in the plane containing the elevation axis (SS') and the optical axis (X'X) of the head objective (1).

6. Device according to one of the preceding claims, characterized in that the offset between the linear arrays along the elevation axis is adjusted to cause a partial overlap of the fields scanned by these linear arrays.

7. Device according to one of the preceding claims, characterized in that a spherical mirror (171, 172) is arranged on each secondary optical axis of the repeater objectives (161, 162), each spherical mirror having a centre of curvature situated in proximity to the centre of the corresponding linear array (21, 22) and being pierced at their centre by an aperture allowing only the useful rays to pass.

8. Device according to one of the preceding claims, characterized in that the head objective (1) includes three lenses (110, 120, 130) and each repeater objective (161, 162) four lenses, the exit pupil of the head objective being transposed to infinity and the exit pupils of the repeater objectives being situated in the cryostat.

9. Device according to one of the preceding claims, characterized in that the offset between the linear arrays (21, 22; 21', 22') is expressed by a partial overlap (Δs) along the elevation axis (SS') of the fields scanned by the linear arrays when the device rotates.

10. Device according to one of the preceding claims, characterized in that the centres (I1, I2, I'1, I'2, I'3, I'4) of the intermediate images (II1, II2, II'1, II'2, II'3, II'4) are situated on the optical axes (X'1, X1, X'2,

**EP 0 645 021 B1**

X2) of the repeater objectives (161, 162).

EP 0 645 021 B1

# FIG.1

CIRCUIT DE PRETRAITEMENT

MOTEUR

EXTRACTION DE CIBLE

# FIG.2

# FIG.3

# FIG.4

# FIG.5a

# FIG.5b

FIG.6

EP 0 645 021 B1

# FIG.7

EP 0 645 021 B1

# FIG.8

# FIG.9

15

# FIG.10a

# FIG.10b

# FIG.11